# DEMANDE DE BREVET EUROPEEN

(11) **EP 3 656 483 A1**
(43) Date de publication de la demande: **27.05.2020**
(21) Numéro de dépôt: 19210454.5
(22) Date de dépôt: 20.11.2019
(51) Int. Cl.: B21J 15/50, B23B 47/28, B25B 27/06

(54) **DISPOSITIF DE DÉPOSE D'UNE FIXATION INSTALLÉE DANS UN PERÇAGE D'UNE STRUCTURE ET PROCÉDÉ DE DÉPOSE ASSOCIÉ**

(30) Priorité: 20.11.2018 FR 1871605
(71) Demandeur: Lisi Aerospace, 75012 Paris (FR)
(72) Inventeur: LE ROY, Adrien, 79200 Parthenay (FR)
(74) Mandataire: Lavoix

(57) **Abrégé**

La présente invention concerne un dispositif de dépose d'une fixation (12) installée dans un perçage d'une structure, ledit dispositif comprenant :
- une base (20) apte à être fixée à la structure ; et- un dispositif de guidage, définissant un passage cylindrique (78) et comportant :
- un support (48) muni de premiers moyens d'assemblage amovible avec la base dans une première configuration assemblée ;
- un élément de blocage (74), mobile par rapport au support ; et
- un dispositif (83, 84) de réglage d'une position axiale de l'élément de blocage par rapport au support, jusqu'à une configuration bloquée correspondant à une mise en contact dudit élément de blocage avec la fixation (12), de sorte à bloquer en rotation ladite fixation par rapport à la structure.

## Description

La présente invention concerne un dispositif de dépose d'une fixation installée dans un perçage d'une structure.

L'invention s'applique particulièrement à la dépose des fixations dites aveugles, par exemple des rivets. Les fixations aveugles sont des fixations installées au travers de structures par une seule face desdites structures, communément appelée « face accessible » ou « face opérationnelle ».

Ces fixations sont notamment utilisées dans l'assemblage de structures d'aéronef dans lesquelles l'autre face, dite « face aveugle », n'est pas accessible à un opérateur. De telles fixations sont par exemple décrites dans le document FR3016417.

Il peut être nécessaire de déposer des rivets ou d'autres fixations aveugles, soit pour des raisons de maintenance soit parce que la fixation n'est pas correctement posée. La dépose de telles fixations implique généralement de détruire la tête de ladite fixation, ce qui permet ensuite de pousser la partie restante jusqu'à la faire sortir du perçage à l'opposé de la face accessible. Il est notamment connu de déposer des fixations en perforant la tête à l'aide d'un foret ou d'une mèche, comme décrit dans le document US7555820.

Cependant, la destruction de la tête ne doit pas endommager les parois du perçage de la structure ; il s'agit donc d'une opération délicate. En particulier, dans le cas de la perforation de la tête par un outil rotatif, il convient d'éviter l'entraînement en rotation de la fixation par ledit outil. Le document US7555820 décrit notamment l'assemblage d'un organe de blocage de l'outil de perforation avec des cavités adaptées, ménagées dans la fixation.

La présente invention a pour but de proposer un dispositif permettant la dépose efficace et sécurisée d'une fixation, sans nécessiter l'aménagement d'une forme particulière sur ladite fixation.

A cet effet, l'invention a pour objet un dispositif de dépose du type précité, comportant : une base comportant un dispositif de fixation amovible à la structure ; et un dispositif de guidage, définissant un passage cylindrique disposé selon un premier axe, ledit passage cylindrique étant apte à accueillir un foret de perforation de la fixation. Ledit dispositif de guidage comporte : un support muni de premiers moyens d'assemblage amovible avec la base dans une première configuration assemblée ; un élément de blocage, mobile par rapport au support selon le premier axe ; et un dispositif de réglage d'une position axiale de l'élément de blocage par rapport au support, entre une configuration bloquée et une configuration débloquée, ladite configuration bloquée correspondant à une mise en contact d'une extrémité distale dudit élément de blocage avec la fixation, de sorte à bloquer en rotation ladite fixation par rapport à la structure.

Suivant d'autres aspects avantageux de l'invention, le dispositif de dépose comporte l'une ou plusieurs des caractéristiques suivantes, prises isolément ou suivant toutes les combinaisons techniquement possibles :
- l'extrémité distale de l'élément de blocage comprend des organes de blocage en rotation de la fixation par rapport à la structure, lesdits organes de blocage présentant une forme effilée, apte à s'enfoncer dans la fixation par pression selon le premier axe ;
- les organes de blocage sont disposés de manière sensiblement circulaire autour du passage cylindrique ;
- le dispositif de réglage comporte : un ressort de compression, apte à déplacer axialement l'élément de blocage dans un sens opposé à l'extrémité distale ; et une butée apte à bloquer ledit déplacement, ladite butée comprenant des moyens d'assemblage avec le support selon une position axiale réglable ;
- le dispositif de fixation de la base comprend au moins une ventouse ;
- le dispositif de dépose comprend en outre un foret de perforation apte à traverser axialement le passage cylindrique du dispositif de guidage ;
- le dispositif de dépose comprend en outre un dispositif de positionnement comportant une ouverture de visualisation disposée selon un deuxième axe, ledit dispositif de positionnement étant muni de deuxième moyens d'assemblage amovible avec la base dans une deuxième configuration assemblée, lesdits deuxième moyens d'assemblage amovible étant configurés de sorte que, par rapport à la base, le deuxième axe dans la deuxième configuration assemblée est sensiblement confondu avec le premier axe dans la première configuration assemblée ;
- le dispositif de dépose comprend en outre un organe d'éclairage apte à envoyer un faisceau lumineux dans l'ouverture de visualisation.

L'invention se rapporte en outre à un procédé de dépose d'une fixation installée dans un perçage d'une structure à l'aide d'un dispositif de dépose tel que décrit ci-dessus, ledit perçage débouchant sur une face opérationnelle de ladite structure, ladite fixation étant sensiblement disposée selon un troisième axe et comportant un fût sensiblement cylindrique et une tête formant saillie radiale par rapport au fût ; ledit procédé comprenant les étapes suivantes : fixation de la base à la face opérationnelle de la structure ; et assemblage de ladite base avec le dispositif de guidage, de sorte que les premier et troisième axes soient sensiblement confondus ; réglage d'une position axiale de l'élément de blocage du dispositif de guidage dans la configuration bloquée, de sorte à bloquer en rotation la tête de la fixation par rapport à la face opérationnelle ; et perforation de la tête de la fixation à l'aide d'un foret de perforation guidé par le passage cylindrique du dispositif de guidage.

Suivant d'autres aspects avantageux de l'invention, le procédé de dépose comporte l'une ou plusieurs des caractéristiques suivantes, prises isolément ou suivant toutes les combinaisons techniquement possibles :
- la fixation comporte : une douille comprenant un corps sensiblement cylindrique et une collerette formant saillie radiale par rapport au corps ; et une vis comprenant un fût sensiblement cylindrique et une tête formant saillie radiale par rapport au fût ; le fût de la vis étant disposé dans le corps de la douille, la collerette de la douille étant au contact de la face opérationnelle de la structure ; le procédé comprenant les étapes suivantes : réglage d'une position axiale de l'élément de blocage du dispositif de guidage dans la configuration bloquée, de sorte à bloquer en rotation la collerette de la douille par rapport à la face opérationnelle ; et perforation de la tête de la vis à l'aide d'un foret de perforation guidé par le passage cylindrique du dispositif de guidage ;
- l'étape de fixation de la base à la face opérationnelle comprend : l'assemblage amovible du dispositif de positionnement avec la base dans la deuxième configuration assemblée, puis le déplacement de la base par rapport à la face opérationnelle jusqu'à une position opérationnelle, dans laquelle la tête de la vis et/ou la collerette de la douille sont sensiblement centrées par rapport à l'ouverture de visualisation, puis l'activation du dispositif de fixation amovible, de sorte à fixer la base à la face opérationnelle, puis la dissociation de la base et du dispositif de positionnement.

L'invention sera mieux comprise à la lecture de la description qui va suivre, donnée uniquement à titre d'exemple non limitatif et faite en se référant aux dessins sur lesquels :
- [Fig 1] la figure 1 est une vue en perspective éclatée d'éléments d'un dispositif de dépose selon un mode de réalisation de l'invention ;
- [Fig 2] la figure 2 est une vue en perspective d'un autre élément du dispositif de dépose de la figure 1 ;
- [Fig 3] [Fig 4] [Fig 5] les figures 3 à 5 sont des vues en coupe d'étapes d'un procédé de dépose d'une fixation à l'aide du dispositif des figures 1 et 2 ;
- [Fig 6] la figure 6 est une vue de détail de la figure 5 ; et
- [Fig 7] la figure 7 est une vue en coupe d'une autre étape du procédé de dépose susmentionné.

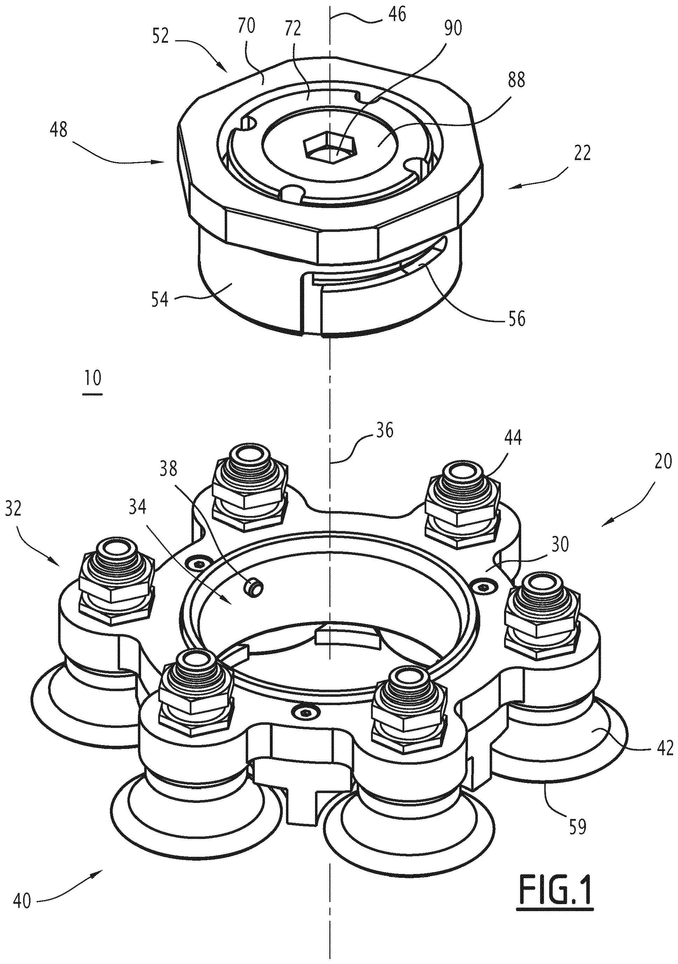

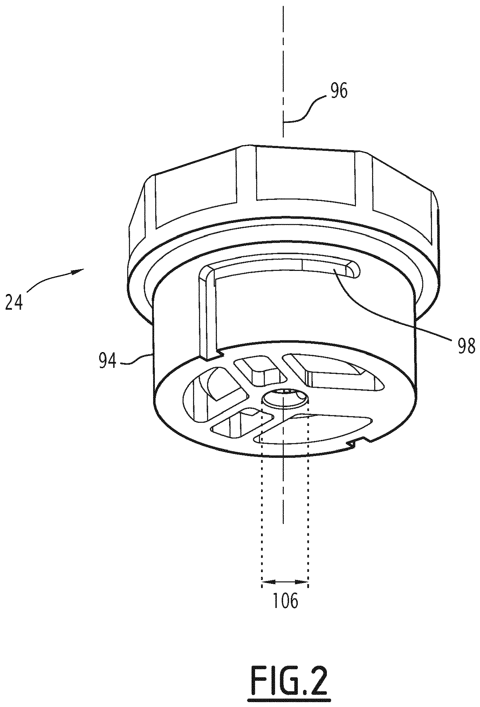

Les figures 1 et 2 montrent des vues d'éléments d'un dispositif de dépose 10 selon un mode de réalisation de l'invention.

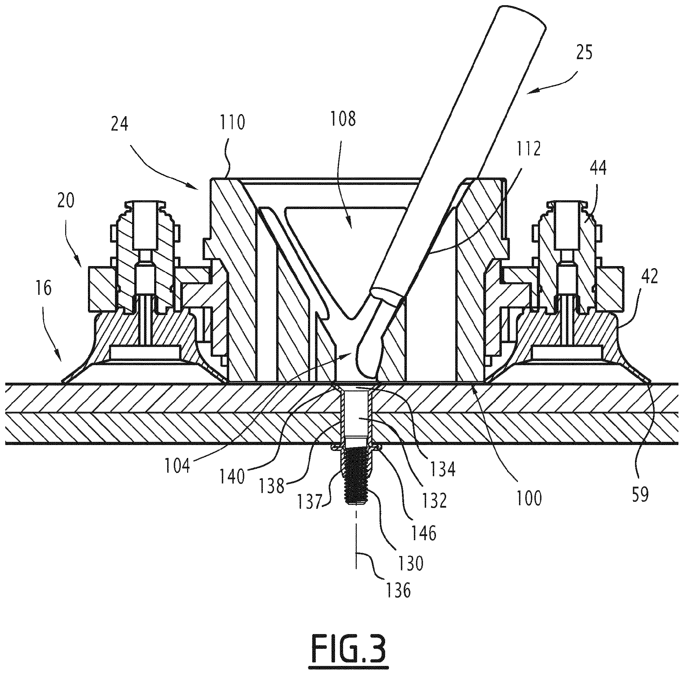

Le dispositif de dépose 10 est notamment destiné à la dépose d'une fixation 12 installée dans un perçage 14 d'une structure 16, telle que représentée sur les figures 3 à 7. La fixation 12 et la structure 16 seront décrites plus précisément ci-après.

Le dispositif de dépose 10 comprend notamment une base 20 et un dispositif de guidage 22, représentés seuls sur la figure 1. De préférence, le dispositif de dépose 10 comprend en outre un dispositif de positionnement 24, représenté sur les figures 2 et 3, et un organe d'éclairage 25.

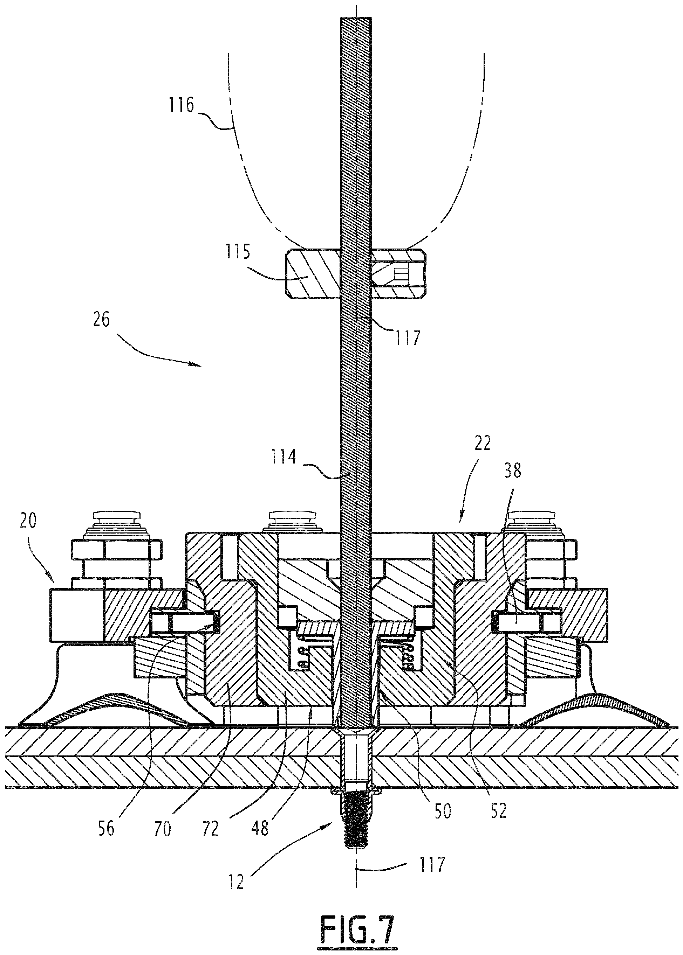

De manière optionnelle, le dispositif de dépose 10 comprend en outre un outil de perforation 26, visible sur la figure 7.

La base 20 comporte un corps annulaire 30 et un dispositif de fixation 32. Le corps annulaire 30 définit une cavité 34 sensiblement cylindrique de révolution, s'étendant selon un axe 36 et ouverte aux deux extrémités. Une paroi de la cavité 34 comporte des éléments d'assemblage 38 tels que des goupilles formant une saillie interne vers l'axe 36.

Le dispositif de fixation 32 est destiné à solidariser temporairement la base 20 avec une surface plane sensiblement perpendiculaire à l'axe 36. Comme il sera décrit par la suite, le dispositif de fixation 32 est particulièrement destiné à solidariser temporairement la base 20 avec une face de la structure 16.

Dans le mode de réalisation représenté, le dispositif de fixation 32 comporte une pluralité de ventouses 40 assemblées au corps annulaire 30 autour de la cavité 34. Les ventouses 40 sont par exemple disposées de manière régulière selon un cercle centré sur l'axe 36. Chaque ventouse 40 comporte notamment une jupe flexible 42 surmontée d'une prise d'air 44.

Le dispositif de guidage 22 est sensiblement disposé selon un axe 46 et comporte un support 48, un élément de blocage 50 et un dispositif 52 de réglage d'une position axiale de l'élément de blocage par rapport au support.

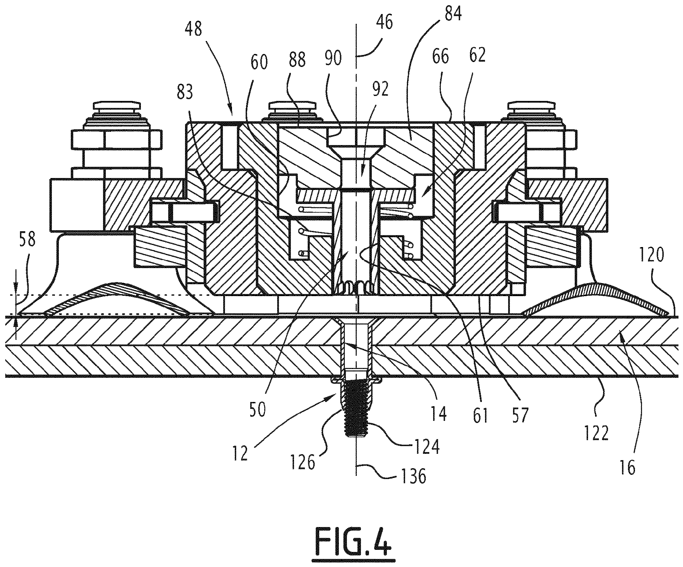

Le support 48 comporte une première surface externe 54 sensiblement cylindrique de révolution autour de l'axe 46, ladite première surface externe étant de forme sensiblement complémentaire à la cavité interne 34 de la base 20. Ladite première surface externe 54 comporte des premiers moyens 56 d'assemblage amovible avec les éléments d'assemblage 38 de ladite base, dans une première configuration assemblée représentée sur les figures 4 à 7.

De préférence, lesdits premiers moyens d'assemblage 56 sont aptes à bloquer le support 48 par rapport à la base 20, en translation axiale et en rotation selon au moins un sens. Les premiers moyens d'assemblage 56 sont par exemple des rainures en L, chaque rainure permettant un assemblage de type baïonnette avec une goupille 38 de la base.

Dans la première configuration assemblée, l'axe 36 du corps annulaire 30 et l'axe 46 du dispositif de guidage 22 sont confondus. Par ailleurs, dans ladite première configuration assemblée, une extrémité dite distale 57 du support 48, orientée vers les jupes flexibles 42 des ventouses 40 de la base 20, présente un retrait 58 par rapport à un plan formé par les bords 59 desdites jupes flexibles 42.

Le support 48 comporte en outre une paroi interne 60 de forme sensiblement de révolution autour de l'axe 46, définissant un espace interne 61, 62.

L'espace interne comporte une portion distale 61 et une portion proximale 62, adjacentes selon l'axe 46 et en communication l'une avec l'autre. Chacune des portions distale 61 et proximale 62 est ouverte sur l'une des extrémités du support 48, soit respectivement sur l'extrémité distale 57 et sur une extrémité opposée, dite proximale 66.

La portion distale 61 de l'espace interne présente un premier diamètre sensiblement constant. La portion proximale 62 présente un second diamètre supérieur au premier diamètre. Au niveau de ladite portion proximale 62, la paroi interne 60 du support 48 comporte un taraudage 68. Ledit taraudage 68 présente de préférence un pas faible, notamment inférieur à 3 mm.

Dans le mode de réalisation représenté, le support 48 est formé d'un élément externe 70 et d'un élément interne 72 coaxiaux et emboîtés l'un dans l'autre. L'élément externe 70 comporte la première surface externe 54 et l'élément interne 72 comporte la paroi interne 60.

L'élément de blocage 50 présente un corps tubulaire 74 et une couronne annulaire 76, solidaire d'une extrémité proximale dudit corps tubulaire. Le corps tubulaire est apte à coulisser axialement dans la portion distale 61 de l'espace interne du support 48. La couronne annulaire 76 est disposée dans la portion proximale 62 dudit espace interne et présente un diamètre supérieur à celui de la portion distale 61.

Le corps tubulaire 74 est ouvert à ses deux extrémités axiales, définissant un passage cylindrique 78. Une extrémité distale dudit corps tubulaire comprend des organes de blocage 80 disposés sensiblement régulièrement autour dudit passage cylindrique 78. Les organes de blocage 80 présentent une forme effilée, apte à s'enfoncer axialement dans un matériau, comme il sera détaillé par la suite.

Dans le mode de réalisation représenté, les organes de blocage ont la forme de dents 80, chacune desdites dents présentant un bord effilé 81. Lesdits bords effilés sont sensiblement disposés selon un cercle de diamètre 82.

Le dispositif de réglage 52 comporte un ressort de compression 83 et un plot de réglage 84.

Le ressort de compression 83 est reçu dans la portion proximale 62 de l'espace interne du support 48. Une extrémité distale dudit ressort est fixe par rapport au support 48. Une extrémité proximale dudit ressort est en appui axial sur la couronne annulaire 76 de l'élément de blocage 50. Le ressort de compression 83 tend à déplacer axialement l'élément de blocage 50 vers l'extrémité proximale 66 du support 48.

Dans le mode de réalisation représenté, le ressort de compression 83 est un ressort hélicoïdal. En variante non représentée, le ressort de compression est par exemple formé par des rondelles de Belleville.

Le plot de réglage 84 est disposé dans la portion proximale 62 de l'espace interne du support 48 et comporte un filetage 86 apte à coopérer avec le taraudage 68 dudit support. Une face distale du plot de réglage 84 est en appui axial sur la couronne annulaire 76 de l'élément de blocage 50, à l'opposé du ressort de compression 83. Une face proximale 88 du plot de réglage 84 comporte une empreinte 90 permettant de manœuvrer ledit plot en rotation dans le support 48. L'empreinte 90 a par exemple une forme à six pans, apte à coopérer avec une clé Allen.

Le plot de réglage 84 comporte en outre un orifice traversant 92 disposé selon l'axe 46 et prolongeant l'empreinte 90 jusqu'à la face distale dudit plot.

Le plot de réglage 84 est apte à être vissé ou dévissé dans le support 48 au moyen d'un outil de type clé Allen coopérant avec l'empreinte 90. Une position axiale dudit plot de réglage par rapport au support peut ainsi être ajustée par un opérateur.

En particulier, la figure 4 représente le dispositif de guidage 22 dans une première configuration dite débloquée. La face proximale 88 du plot de réglage 84 est sensiblement coplanaire avec l'extrémité proximale 66 du support 48. Le ressort 83 est dans un premier état de compression et les bords effilés 81 des dents 80 de l'élément de blocage 50 sont sensiblement coplanaires avec l'extrémité distale 57 du support 48.

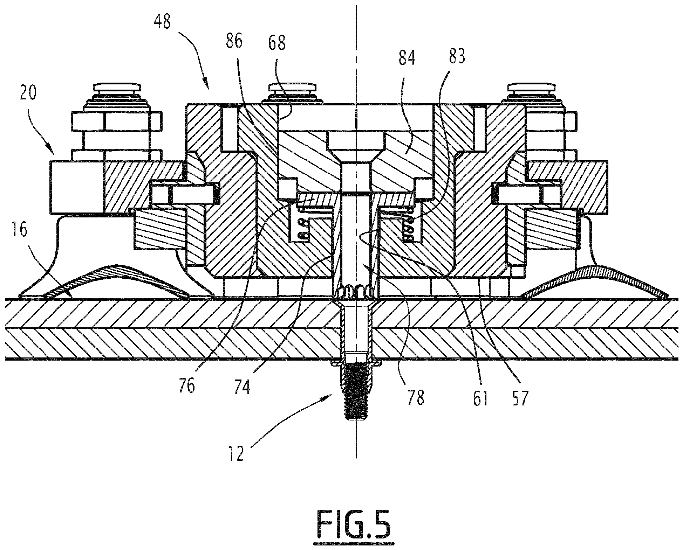

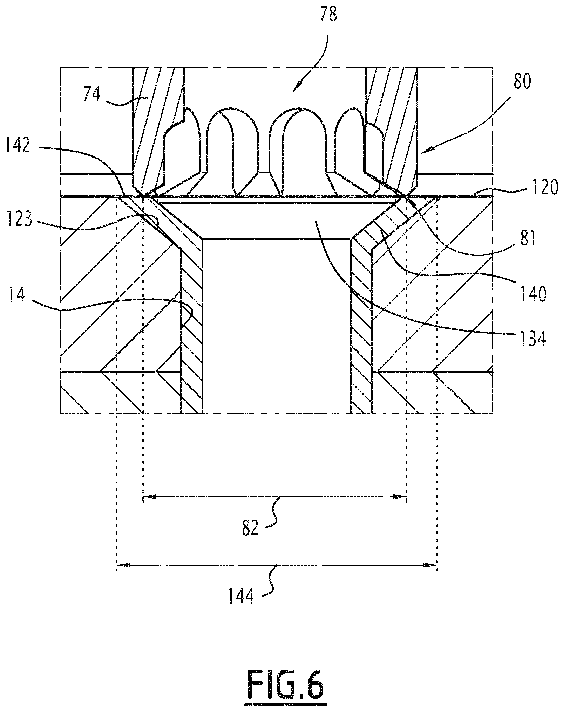

Par ailleurs, les figures 5 et 6 représentent le dispositif de guidage 22 dans une deuxième configuration dite bloquée. La face proximale 88 du plot de réglage 84 est située à l'intérieur de la portion proximale 62 de l'espace interne. Le ressort 83 est dans un deuxième état de compression, plus comprimé que le premier état évoqué ci-dessus. Les bords effilés 81 des dents 80 de l'élément de blocage 50 forment une saillie par rapport à l'extrémité distale 57 du support 48. La configuration bloquée sera évoquée plus en détails ci-après.

Le dispositif de positionnement 24, représenté sur les figures 2 et 3, comporte une deuxième surface externe 94 sensiblement cylindrique de révolution autour d'un axe 96. Ladite deuxième surface externe 94 est de forme sensiblement complémentaire à la cavité interne 34 de la base 20. Ladite deuxième surface externe 94 comporte des deuxièmes moyens 98 d'assemblage amovible avec les éléments d'assemblage 38 de ladite base, dans une deuxième configuration assemblée représentée sur la figure 3. Dans ladite deuxième configuration assemblée, l'axe 36 du corps annulaire 30 et l'axe 94 du dispositif de positionnement 24 sont confondus.

Comme les premiers moyens d'assemblage 56 du dispositif de guidage 22, les deuxièmes moyens d'assemblage 98 sont par exemple des rainures en L permettant un assemblage de type baïonnette.

Le dispositif de positionnement 24 est configuré de sorte que dans la deuxième configuration assemblée, une face distale 100 dudit dispositif de positionnement est sensiblement coplanaire avec les bords 59 des jupes flexibles 42 des ventouses 40 de la base 20.

Le dispositif de positionnement 24 comporte une ouverture 104 de visualisation, de forme cylindrique centrée sur l'axe 96 et débouchant sur la face distale 100. Ladite ouverture 104 présente un diamètre 106.

De préférence, le dispositif de positionnement 24 comporte en outre une cavité conique 108 qui prolonge l'ouverture de visualisation 104 en s'évasant jusqu'à une face proximale 110 dudit dispositif de positionnement 24.

Dans le mode de réalisation représenté, la cavité conique comporte une goulotte 112 s'étendant sensiblement selon une génératrice du cône. La goulotte 112 est apte à accueillir l'organe d'éclairage 25, qui se présente comme une lampe de forme allongée. Reçue dans la goulotte 112, la lampe 25 est apte à envoyer un faisceau lumineux dans l'ouverture de visualisation 104 en direction de la face distale 100. En variante non représentée, la cavité conique comporte plusieurs goulottes.

L'outil de perforation 26 comporte un foret 114, une butée 115 et un appareil 116 d'entraînement en rotation du foret.

Le foret 114, de forme sensiblement cylindrique de révolution selon un axe 117, est apte à coulisser dans le passage cylindrique 78 de l'élément de blocage 50 et dans l'orifice traversant 92 du plot de réglage 84.

La butée 115 a par exemple la forme d'une rondelle disposée autour du foret pour limiter son déplacement axial dans ledit passage cylindrique 78.

Le dispositif de dépose 10 précédemment décrit est destiné à la dépose de la fixation 12, représentée sur les figures 3 à 7, qui va être à présent décrite.

La fixation 12 est installée dans le perçage 14 de la structure 16, qui est par exemple un panneau de structure d'aéronef. La structure 16 comporte par exemple des éléments en matériau composite.

La structure 16 comporte notamment une première 120 et une seconde 122 faces opposées, la première face 120 étant dite « face accessible » ou « face opérationnelle » et la seconde face 122 étant dite « face aveugle ».

Le perçage 14 traverse la structure 16 de la première 120 à la seconde 122 face. Le perçage 14 a une forme essentiellement cylindrique de révolution. A proximité de la première face 120, le perçage comporte cependant une fraisure 123.

Dans cet exemple, la fixation 12 est du type aveugle et comporte une vis 124 et une douille 126, insérées dans le perçage 14. La vis 124 et la douille 126 sont notamment métalliques, par exemple en acier inoxydable du type A286, ou en alliage de titane.

La vis 124 comporte une portion filetée 130, un fût 132 et une tête 134, alignés selon un axe 136. Dans le mode de réalisation représenté, la tête 134 est une tête fraisée, affleurant la première face 120 de la structure 16 dans la configuration installée des figures 3 à 7.

La douille 126 a une forme tubulaire et comporte une portion taraudée 137, un corps lisse 138 et une collerette évasée 140, alignés selon l'axe 136. La collerette 140 est disposée dans l'extrémité évasée 123 du perçage 14. Une extrémité libre 142 de ladite collerette a sensiblement la forme d'un anneau plan, présentant notamment un diamètre externe 144.

Dans la configuration installée, la collerette 140 reçoit la tête 134 de la vis 124, une extrémité de ladite tête et l'extrémité libre 142 de ladite collerette étant sensiblement coplanaires avec la première face 120 de la structure 16.

Selon une variante non représentée, la collerette de la douille est sensiblement plane et en appui contre la première face 120 ; et la tête de la vis est protubérante par rapport à ladite première face.

Selon une variante non représentée, la fixation 12 est un rivet comportant un fût et une tête écrasée sur chaque face de la structure.

Le fût 132 de la vis est reçu dans le corps 138 de la douille à l'intérieur du perçage 14. La portion filetée 130 de la vis et la portion taraudée 137 de la douille, vissées l'une dans l'autre, forment une saillie par rapport à la seconde face 122 de la structure 16.

Dans la configuration installée, le corps de la douille comporte un bulbe externe 146 au contact de ladite seconde face 122. Une telle installation de la fixation 12 dans la structure 16 avec formation du bulbe externe est notamment décrite dans le document FR3016417.

L'élément de blocage 50 et le dispositif de positionnement 24 du dispositif de dépose 10 sont notamment configurés en fonction des dimensions de la fixation 12.

En particulier, le diamètre 82 du cercle formé par les dents 80 de l'élément de blocage est choisi inférieur au diamètre externe 144 de l'extrémité libre de la collerette 140 de la fixation 12, et supérieur au diamètre externe de la tête 134 de la vis. Préférentiellement, l'élément de blocage 50 est configuré de sorte que les bords 81 de toutes les dents 80 puissent simultanément entrer en contact avec ladite collerette 140.

Selon un mode de réalisation non représenté, le dispositif de dépose 10 comprend plusieurs éléments de blocage analogues à l'élément de blocage 50 décrit ci-dessus, mais présentant des diamètres 82 différents.

Selon un mode de réalisation non représenté, le diamètre 82 du cercle formé par les dents 80 de l'élément de blocage est choisi inférieur au diamètre externe de la tête écrasée d'un rivet à déposer.

De même, le diamètre 106 de l'ouverture de visualisation 104 du dispositif de positionnement 24 est préférentiellement choisi sensiblement égal au diamètre externe 144 de l'extrémité libre de la collerette 140 de la fixation 12.

Avantageusement, l'outil de perforation 26 du dispositif de dépose 10 est également configuré en fonction des dimensions de la fixation 12. En particulier, un diamètre du foret 114 est choisi supérieur au diamètre du fût 132 de la vis 124 et inférieur au diamètre du perçage 14.

Un procédé de dépose de la fixation 12 à l'aide du dispositif 10 décrit ci-dessus va maintenant être décrit.

Tout d'abord, la base 20 et le dispositif de positionnement 24 sont assemblés l'un à l'autre dans la deuxième configuration assemblée de la figure 3. Puis, la face distale 100 dudit dispositif de positionnement et le bord 59 des jupes 42 des ventouses 40 de ladite base sont placés contre la première face 120 de la structure 16, à proximité de la fixation 12.

L'ensemble base 20/dispositif de positionnement 24 est ensuite déplacé par glissement contre la première face 120, jusqu'à une position opérationnelle, dans laquelle la tête 134 de la vis et/ou la collerette 140 de la douille sont sensiblement centrées par rapport à l'ouverture de visualisation 104. Dans ladite position opérationnelle, représentée sur les figures 3 à 7, l'axe 36 du corps annulaire 30 de la base 20 et l'axe 136 de la fixation 12 sont sensiblement confondus.

Dans le cas où ladite ouverture présente un diamètre 106 sensiblement égal au diamètre externe 144 de la collerette 140, la position opérationnelle est identifiée aisément par l'opérateur car la collerette 140 s'inscrit dans l'ouverture de visualisation 104. De préférence, l'organe d'éclairage 25 est utilisé pour faciliter la détermination visuelle de la position opérationnelle, en éclairant la tête 134 de la vis et la collerette 140 de la douille.

La base 20 est ensuite maintenue dans la position opérationnelle et une dépressurisation est effectuée dans les jupes 42 des ventouses 40, par aspiration au niveau des prises d'air 44. Ainsi, les ventouses 40 fixent solidement la base 20 à la première face 120 de la structure dans ladite position opérationnelle.

Le dispositif de positionnement 24 est alors dissocié de la base 20. Le dispositif de guidage 22, dans la configuration débloquée de la figure 4, est assemblé à ladite base selon la première configuration assemblée. L'axe 46 dudit dispositif de guidage 22 et l'axe 136 de la fixation 12 sont alors sensiblement confondus.

Au moyen d'un outil de type clé Allen, le plot de réglage 84 est vissé dans la portion proximale 62 de l'espace interne du support 48. Ledit plot se déplace ainsi en direction de la première face 120 de la structure 16, entraînant l'élément de blocage 50 et comprimant le ressort 83. Les dents 80 de l'élément de blocage 50 se déplacent donc axialement d'une distance équivalente au retrait 58, jusqu'à entrer en contact avec l'extrémité libre 142 de la collerette 140 de la douille 126.

Le vissage du plot de réglage 84 est poursuivi de sorte à exercer une pression axiale sur l'élément de blocage 50 en direction de la douille 126. La configuration bloquée, représentée sur les figures 5 et 6, est alors atteinte. Dans ladite configuration bloquée, comme visible sur la figure 6, les bords effilés 81 des dents 80 de l'élément de blocage 50 sont enfoncés dans l'extrémité libre 142 de la collerette 140. La douille 126 est ainsi maintenue bloquée en rotation par rapport à la structure 16 par l'ensemble base 20/élément de guidage 22.

Le pas fin du taraudage 68 et du filetage 86 permet de régler précisément la position axiale du plot de réglage 84 par rapport au support 48 dans la configuration bloquée, de sorte à adapter la pression axiale exercée sur la douille 126 par l'élément de blocage 50. La position du plot de réglage 84 est maintenue par la pression axiale opposée, exercée par le ressort 83 sur la couronne 76 de l'élément de blocage.

La douille 126 étant maintenue fixe par rapport à la structure 16, la tête 134 de la vis 124 est perforée à l'aide du foret 114 de l'outil de perforation 26. La mise en contact du foret 114 avec la tête 134 est notamment guidée par l'orifice traversant 92 et le passage cylindrique 78 du dispositif de guidage, dans lesquels est introduit ledit foret.

Le foret 114 est ainsi enfoncé dans la tête 134 tout en étant entraîné en rotation par l'appareil 116. Le diamètre du foret supérieur au diamètre du fût 132 permet de détruire ladite tête 134 et de désolidariser la collerette 140 du corps lisse 138 de la douille.

Le blocage en rotation de la douille 126 permet d'éviter des frottements entre ladite douille et les parois du perçage 14. De même, la butée 115, entrant en contact avec l'extrémité proximale 66 du support 48, empêche le foret de s'enfoncer trop profondément dans la vis 124 et/ou le perçage 14. Les risques d'endommager le perçage 14 durant l'utilisation du foret 114 sont ainsi diminués.

Le foret 114 est ensuite retiré du dispositif de guidage 22 et la fixation 12 est alors poussée axialement dans le perçage 14, pour être éjectée dudit perçage par la seconde face 122 de la structure 16. La collerette évasée 140 de la douille, séparée du corps lisse 138 pendant l'opération de perçage de la fixation, se détache de la fraisure 123 par la première face 120 de la structure.

En variante, le diamètre du foret est choisi inférieur au diamètre du fût 132 de la vis 124. Dans ce cas, un deuxième outillage est nécessaire pour séparer la collerette évasée 140 du corps lisse 138 de la douille.

Enfin, les prises d'air 44 de la base 20 sont ouvertes, de sorte à dissocier ladite base 20 de la structure 16.

Quelle que soit la méthode de dépose utilisée, une nouvelle fixation permanente peut ensuite être installée dans le perçage 14 ainsi libéré.

## Revendications

1. Dispositif (10) de dépose d'une fixation (12) installée dans un perçage (14) d'une structure (16), ledit dispositif comprenant :
- une base (20) comportant un dispositif (32) de fixation amovible à la structure ; et
- un dispositif de guidage (22), définissant un passage cylindrique (78, 92) disposé selon un premier axe (46), ledit passage cylindrique étant apte à accueillir un foret (114) de perforation de la fixation, ledit dispositif de guidage comportant :
- un support (48) muni de premiers moyens (56) d'assemblage amovible avec la base dans une première configuration assemblée ;
- un élément de blocage (50), mobile par rapport au support selon le premier axe ; et
- un dispositif (52) de réglage d'une position axiale de l'élément de blocage (50) par rapport au support, entre une configuration bloquée et une configuration débloquée, ladite configuration bloquée correspondant à une mise en contact d'une extrémité distale dudit élément de blocage avec la fixation (12), de sorte à bloquer en rotation ladite fixation par rapport à la structure.

2. Dispositif de dépose selon la revendication 1, dans lequel l'extrémité distale de l'élément de blocage comprend des organes (80) de blocage en rotation de la fixation par rapport à la structure, lesdits organes de blocage présentant une forme effilée (81), apte à s'enfoncer dans la fixation par pression selon le premier axe (46).

3. Dispositif de dépose selon la revendication 2, dans lequel les organes de blocage (80) sont disposés de manière sensiblement circulaire (82) autour du passage cylindrique (78).

4. Dispositif de dépose selon l'une des revendications précédentes, dans lequel le dispositif de réglage (52) comporte : un ressort de compression (83), apte à déplacer axialement l'élément de blocage (50) dans un sens opposé à l'extrémité distale ; et une butée (84) apte à bloquer ledit déplacement, ladite butée comprenant des moyens (86) d'assemblage avec le support (48) selon une position axiale réglable.

5. Dispositif de dépose selon l'une des revendications précédentes, dans lequel le dispositif de fixation (32) de la base comprend au moins une ventouse (40).

6. Dispositif de dépose selon l'une des revendications précédentes, comprenant en outre un foret de perforation (114) apte à traverser axialement le passage cylindrique (78, 92) du dispositif de guidage.

7. Dispositif de dépose selon l'une des revendications précédentes, comprenant en outre un dispositif de positionnement (24) comportant une ouverture de visualisation (104) disposée selon un deuxième axe (96), ledit dispositif de positionnement étant muni de deuxième moyens (98) d'assemblage amovible avec la base (20) dans une deuxième configuration assemblée, lesdits deuxième moyens d'assemblage amovible étant configurés de sorte que, par rapport à la base, le deuxième axe dans la deuxième configuration assemblée est sensiblement confondu avec le premier axe (46) dans la première configuration assemblée.

8. Dispositif de dépose selon la revendication 7, comprenant en outre un organe d'éclairage (25) apte à envoyer un faisceau lumineux dans l'ouverture de visualisation (104).

9. Procédé de dépose d'une fixation (12) installée dans un perçage (14) d'une structure (16) à l'aide d'un dispositif de dépose selon l'une des revendications précédentes, ledit perçage débouchant sur une face opérationnelle (120) de ladite structure, ladite fixation étant sensiblement disposée selon un troisième axe (136) et comportant un fût (132) sensiblement cylindrique et une tête (134, 140) formant saillie radiale par rapport au fût ;
ledit procédé comprenant les étapes suivantes :
- fixation de la base (20) à la face opérationnelle (120) de la structure; et assemblage de ladite base avec le dispositif de guidage (22), de sorte que les premier (46) et troisième (136) axes soient sensiblement confondus ;
- réglage d'une position axiale de l'élément de blocage (50) du dispositif de guidage dans la configuration bloquée, de sorte à bloquer en rotation la tête (134, 140) de la fixation (12) par rapport à la face opérationnelle (120) ; et
- perforation de la tête (134) de la fixation à l'aide d'un foret de perforation (114) guidé par le passage cylindrique (78, 92) du dispositif de guidage.

10. Procédé de dépose selon la revendication 9, dans lequel la fixation (12) comporte :
- une douille (126) comprenant un corps (138) sensiblement cylindrique et une collerette (140) formant saillie radiale par rapport au corps ; et
- une vis (124) comprenant un fût (132) sensiblement cylindrique et une tête (134) formant saillie radiale par rapport au fût ;
le fût de la vis étant disposé dans le corps de la douille, la collerette (140) de la douille étant au contact de la face opérationnelle (120) de la structure ;
ledit procédé comprenant les étapes suivantes :
- réglage d'une position axiale de l'élément de blocage (50) du dispositif de guidage dans la configuration bloquée, de sorte à bloquer en rotation la collerette (140) de la douille par rapport à la face opérationnelle (120) ; et
- perforation de la tête (134) de la vis à l'aide d'un foret de perforation (114) guidé par le passage cylindrique (78, 92) du dispositif de guidage.

11. Procédé de dépose selon la revendication 9 ou la revendication 10 prise en combinaison avec la revendication 7 ou la revendication 8, dans lequel l'étape de fixation de la base (20) à la face opérationnelle (120) comprend :
- l'assemblage amovible du dispositif de positionnement (24) avec la base (20) dans la deuxième configuration assemblée, puis
- le déplacement de la base par rapport à la face opérationnelle jusqu'à une position opérationnelle, dans laquelle la tête (134) de la vis et/ou la collerette (140) de la douille sont sensiblement centrées par rapport à l'ouverture de visualisation (104), puis
- l'activation du dispositif (32) de fixation amovible, de sorte à fixer la base à la face opérationnelle, puis
- la dissociation de la base et du dispositif de positionnement.
